(19) Europäisches Patentamt
European Patent Office
Office européen des brevets

(11) **EP 2 328 115 B1**

(12) **FASCICULE DE BREVET EUROPEEN**

(45) Date de publication et mention
de la délivrance du brevet:
**20.11.2013 Bulletin 2013/47**

(51) Int Cl.:
***G06K 9/62*** *(2006.01)*

(21) Numéro de dépôt: **10192158.3**

(22) Date de dépôt: **23.11.2010**

(54) **Procédé, dispositif et système pour la fusion d'informations provenant de plusieurs capteurs**

Verfahren, Vorrichtung und System zum kombinieren von mehreren Sensoren abgeleiteten Informationen

Method, device and system for combining information derived from several sensors

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.11.2009 FR 0905724**

(43) Date de publication de la demande:
**01.06.2011 Bulletin 2011/22**

(73) Titulaire: **Thales**
**92200 Neuilly Sur Seine (FR)**

(72) Inventeur: **Pichon, Frédéric**
**75014, PARIS (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(56) Documents cités:
• **D. MERCIER, T. DENOEUX, M.H. MASSON: "A parametrized family of belief functions correction mechanisms", INFORMATION PROCESSING AND MANAGEMENT OF UNCERTAINTY IN KNOWLEDGE-BASED SYSTEMS, 22 juin 2008 (2008-06-22), - 27 juin 2008 (2008-06-27), pages 306-313, XP002587071, Malaga, Spain**

• **D. DUBOIS, T. DENOEUX: "Pertinence et Sincérité en Fusion d'Informations", RENCONTRES FRANCOPHONES SUR LA LOGIQUE FLOUE ET SES APPLICATIONS, 5 novembre 2009 (2009-11-05), - 6 novembre 2009 (2009-11-06), pages 1-8, XP002587072, Annecy, France**

• **P. SMETS: "Belief functions: The disjunctive rule of combination and the generalized Bayesian theorem", INTERNATIONAL JOURNAL OF APPROXIMATE REASONING, vol. 9, no. 1, 1 août 1993 (1993-08-01), pages 1-35, XP002587073,**

• **DENOEUX T: "APPLICATION DU MODELE DES CROYANCES TRANSFERABLES EN RECONNAISSANCEDE FORMES APPLICATION OF THE TRANSFERABLE BELIEF MODEL TO PATTERN RECOGNITION", TRAITEMENT DU SIGNAL, CENTRALE DES REVUES, MONTROUGE, FR, vol. 14, no. 5, 1 janvier 1997 (1997-01-01), pages 443-451, XP001031928, ISSN: 0765-0019**

• **Isabelle Bloch: "Chapitre 7 - Théorie des croyances de Dempster-Shafer" In: Isabelle Bloch: "Fusion d'informations en traitement du signal et des images (Traité IC2, série Traitement du signal et de l'image)", 1 janvier 2003 (2003-01-01), Hermès, Paris, France, XP002587074, ISBN: 2-7462-0628-5 pages 119-149, * le document en entier ***

- **THIERRY DENOEUX ED - PAUL HORRIDGE ET AL: "The cautious rule of combination for belief functions and some extensions", 2006 9TH INTERNATIONAL CONFERENCE ON INFORMATION FUSION, FUSION - 2006 9TH INTERNATIONAL CONFERENCE ON INFORMATION FUSION, FUSION 2006 INST. OF ELEC. AND ELEC. ENG. COMPUTER SOCIETY US, IEEE, PISCATAWAY, NJ, USA, 1 juillet 2006 (2006-07-01), pages 1-8, XP031042313, ISBN: 978-1-4244-0953-2**

**Description**

L'invention concerne la fusion d'informations provenant de plusieurs capteurs et plus particulièrement la fusion d'informations imparfaites provenant de capteurs dont on connaît l'état de fonctionnement.

Les systèmes intégrant plusieurs capteurs sont utilisés dans une grande variété de domaines tels que la surveillance de site, la maintenance, la robotique, le diagnostic médical ou les prévisions météorologiques. De tels systèmes réalisent, par exemple, des fonctions de classification, d'identification et de suivi en temps réel connu sous le terme anglo-saxon « tracking ».

Pour tirer le meilleur parti des systèmes multi-capteurs, il est nécessaire d'utiliser une méthode efficace de fusion d'informations pour combiner les données provenant des différents capteurs du système et générer une décision.

Selon l'art connu, certaines méthodes de fusions d'informations reposent sur la théorie de Dempster-Shafer et utilise ainsi des fonctions de croyance, qui est l'outil de base pour représenter des informations dans cette théorie. Les fonctions de croyance sont connues pour leur capacité à représenter fidèlement des informations imparfaites. On appelle information imparfaite une information comportant une imprécision ou une incertitude ou une information incomplète. Les capteurs d'un système sont considérés comme des sources d'informations imparfaites, notamment à cause de leur imprécision. Le terme capteur s'entend ici au sens large. Il inclut des dispositifs physiques pour l'acquisition des données (caméra, radar, ...) mais aussi des dispositifs pour le traitement de ces données. Il est possible d'établir une fonction de croyance à partir des données fournies par la plupart des capteurs disponibles dans le commerce. Des méthodes de combinaison de fonctions de croyance peuvent être utilisées. De part leur nature, ces méthodes sont donc particulièrement appropriées au problème de la fusion d'informations imparfaites issues de capteurs.

Soit X une variable à valeurs dans un ensemble fini $\Omega$. L'information détenue par un capteur quant à la valeur effectivement prise par X peut être quantifiée par une fonction de croyance. Une fonction de croyance est définie formellement comme une fonction, notée bel, de l'ensemble des parties de $\Omega$, noté 2", dans l'intervalle [0,1] et vérifiant certaines propriétés mathématiques. La quantité *bel(A)* représente la part *totale* de croyance allouée par le capteur au fait que la valeur de *X* soit dans A, où A est une partie (aussi appelée sous-ensemble) de $\Omega$ (ce que l'on note A $\subseteq$ $\Omega$). Il existe différentes représentations équivalentes d'une fonction de croyance, qui sont utiles en pratique. En particulier, la fonction de masse, notée m, est une fonction de $2^{\Omega}$ dans [0,1] qui vérifie la condition : $\sum_{A\subseteq\Omega}\mathrm{m}(A)=1$. La quantité *m(A)*, appelée *masse de A,* représente la part de croyance allouée à *A* (et à aucun sous-ensemble strict). La fonction de croyance *bel* associée à une fonction de masse m s'obtient de la façon suivante: $bel(A) = \Sigma_{\varnothing \neq B \subset A} m(B)$, pour tout A $\subseteq$ $\Omega$. La fonction de masse m associée à une fonction de croyance bel s'obtient de la façon suivante:

$$m(A) = \sum_{\varnothing \neq B \subseteq A} (-1)^{|A|-|B|} bel(B),$$

pour tout A $\subseteq$ $\Omega$. De part la correspondance biunivoque entre une fonction de croyance bel et sa fonction de masse *m* associée, nous utiliserons l'appellation Fonction de Croyance (FC) au sens large dans ce document, pour désigner aussi bien une fonction de croyance *bel* que sa fonction de masse *m* associée (le contexte est en général suffisant pour déterminer si les objets manipulés sont des fonctions de masse *m* ou des fonctions de croyance *bel*).

On peut considérer à titre d'exemple non limitatif, un système multi-capteurs de type classifieur utilisé pour la reconnaissance optique de caractères manuscrits. On suppose que le système est destiné à déterminer si le caractère formé sur une image 1 (non représentée) est une des lettres 'a' ou 'b'. Soit *X* la variable associée au caractère. On a donc un ensemble de valeurs $\Omega=\{a, b\}$ pour la variable (le caractère) *X*. Chacun des capteurs du système est un classifieur fournissant lui-même une information sur le caractère à reconnaître sous la forme d'une FC. On suppose qu'il y a deux capteurs de ce type dans notre exemple. Le capteur Ci fournit une fonction de croyance $m_{C1}$ définie comme suit :

$$m_{C1}(\varnothing) = 0$$

$$m_{C1}(\{a\}) = 0.8$$

$$m_{C1}(\{b\}) = 0$$

$$m_{C1}(\{a,b\}) = 0.2$$

Dans cet exemple, le capteur $C_1$ considère qu'il est fortement probable (0.8) que le caractère à reconnaître soit {a}. $m_{C1}(\{a,b\}) = m_{C1}(\Omega) = 0.2$ représente l'ignorance du capteur. Le capteur $C_2$ fournit une fonction de croyance $m_{C2}$ définie comme suit:

$$m_{C2}(\varnothing) = 0$$

$$m_{C2}(\{a\}) = 0.2$$

$$m_{C2}(\{b\}) = 0$$

$$m_{C2}(\{a,b\}) = 0.8$$

La fonction $m_{c2}$ traduit le fait que le capteur $C_2$ dispose d'assez peu d'information sur le caractère observé : le capteur attribue une petite part de croyance (0.2) au caractère {a} et une grand part de croyance (0.8) à l'ignorance, c'est-à-dire à l'ensemble $\Omega = \{a, b\}$.

La théorie de Dempster-Shafer permet de combiner les fonctions de croyances représentant des informations issues de sources différentes, de façon à obtenir une fonction de croyance prenant en compte les influences de chacune des sources. La fonction de croyance ainsi obtenue, appelée fonction de croyance fusionnée, représente la connaissance combinée des différentes sources d'informations imparfaites (les capteurs).

Afin d'obtenir une fonction de croyance fusionnée représentative de la réalité, il est nécessaire de prendre en compte des connaissances portant sur les états des sources.

Les méthodes de fusion d'informations connues permettent seulement de prendre en compte certains types de connaissances sur les états des sources (capteurs). En effet, les solutions existantes se limitent à la prise en compte de connaissances particulières sur la dépendance, la compétence et la sincérité des sources. Par exemple, on connaît déjà un opérateur de fusion permettant de fusionner des informations issues de sources indépendantes et compétentes. Cet opérateur est connu dans la littérature sous le nom de « règle de Dempster non normalisée ». Nous désignons cet opérateur par le symbole $\oplus^D$. Ainsi, la FC résultant de la fusion par $\oplus^D$ de deux FC $m_{C1}$ et $m_{C2}$ est notée $m_{C1} \oplus^D m_{C2}$. La définition de l'opérateur $\oplus^D$ est la suivante, Soient deux fonctions de croyance $m_{C1}$ et $m_{C2}$, nous avons, pour tout $A \subseteq \Omega$ :

$$m_{C1} \oplus^D m_{C2}(A) = \sum_{B \cap C = A} m_{C1}(B) m_{C2}(C).$$

En appliquant la formule aux deux fonctions de croyance $m_{C1}$ et $m_{c2}$ données en exemple plus haut, on obtient :

$$m_{C1} \oplus^D m_{C2}(\{a\}) = m_{C1}(\{a\})\, m_{C2}(\{a\}) + m_{C1}(\{a\})\, m_{C2}(\{a,b\}) + m_{C1}(\{a,b\})\, m_{C2}(\{a\})$$
$$= 0.8{*}0.2 + 0.8{*}0.8 + 0.2{*}0.2$$
$$= 0.84$$

$$m_{C1} \oplus^D m_{C2}(\{a,b\}) = m_{C1}(\{a,b\})\, m_{C2}(\{a,b\}) = 0.8{*}0.2 = 0.16$$

On déduit également $m_{C1} \oplus^D m_{C2}(\{b\}) = 0$ et $m_{C1} \oplus^D m_{C2}(\varnothing) = 0$ de part la condition $\sum_{A \subseteq \Omega} m(A) = 1$ pour toute FC m.

On connaît déjà également un opérateur de fusion permettant de fusionner des informations issues de sources indépendantes dont au moins une est compétente. Cet opérateur est connu dans la littérature sous le nom de « règle disjonctive». Nous désignons cet opérateur par le symbole $\oplus^{DP}$.

On connaît déjà également un opérateur plus général que les opérateurs $\oplus^D$ et $\oplus^{DP}$ permettant de prendre en considération une connaissance telle que la propension des capteurs à être dans tel état au regard de leur compétence et leur sincérité, plutôt que dans tel autre état. Cet opérateur nécessite toutefois que les capteurs soient indépendants. Par exemple, si l'on note E1 l'état « les sources sont compétentes et indépendantes» et E2 l'état « les sources sont indépendantes et au moins une est compétente», cet opérateur peut prendre en compte une connaissance du type: « avec une probabilité p, les sources sont dans l'état E1 (c.-à-d. avec une probabilité p, les sources sont compétentes et indépendantes), et avec une probabilité 1-p, elles sont dans l'état E2 (c.-à-d. avec une probabilité 1-p les sources sont indépendantes et au moins une est compétente) ».

On connaît déjà également un opérateur de fusion permettant de fusionner des informations issues de sources compétentes et non indépendantes. Cet opérateur est connu dans la littérature sous le nom de « règle prudente ». Nous désignons cet opérateur par le symbole $\oplus^P$. Ainsi, la FC résultant de la fusion par $\oplus^P$ deux FC $m_{C1}$ et $m_{C2}$ est notée $M_{C1} \oplus^P M_{C2}$ La définition de l'opérateur $\oplus^P$ étant complexe dans le cas général, mais simple dans le cas de fonctions de croyance du type de celles données en exemple plus haut, nous nous contentons ici de donner la définition de la règle prudente pour des fonctions de croyance du type de celles données en exemple plus haut. Soient deux fonctions de croyance $m_{C1}$ et $m_{C2}$ sur $\Omega = \{a, b\}$ telles que:

$$m_{C1}(\{a\}) = 1-y, \quad m_{C1}(\{a,b\}) = y$$

et

$$m_{C2}(\{a\}) = 1-z, \quad m_{C2}(\{a,b\}) = z,$$

avec $y,z \in (0,1)$ (nous avons donc $m_{C1}(\emptyset) = 0$, $m_{C1}(\{b\}) = 0$, et $ma_{C2}(\emptyset) = 0$, $m_{C2}(\{b\}) = 0$ de part la condition

$$\sum_{A \subseteq \Omega} m(A) = 1$$ pour toute FC m). Le résultat $m_{C1} \oplus^P m_{C2}$ de la fusion par la règle prudente des FC $m_{C1}$ et $m_{C2}$ s'obtient alors avec la formule:

$$m_{C1} \oplus^P m_{C2}(\{a\}) = 1-\text{minimum}(y,z),$$

$$m_{C1} \oplus^P m_{C2}(\{a,b\}) = \text{minimum}(y,z).$$

En appliquant la formule aux deux fonctions de croyance $m_{C1}$ et $m_{C2}$ données en exemple plus haut, on obtient :

$$m_{C1} \oplus^P m_{C2}(\{a\}) = 1 - \text{minimum}(0.8, 0.2) = 1 - 0.2 = 0.8,$$

$$m_{C1} \oplus^P m_{C2}(\{a,b\}) = \text{minimum}(0.8, 0.2) = 0.2 .$$

Notons qu'il existe déjà également un opérateur, appelé « règle hardie », permettant de fusionner des informations issues de sources non indépendantes et dont au moins une est compétente.

On connaît par le document D. Mercier, T. Denoeux, M.H. Masson, "A parametrized familiy of belief functions correction mechanisms" un procédé pour la fusion d'informations provenant de plusieurs capteurs. Chaque capteur produit une fonction de croyance. Le procédé divulgué comporte une étape de calcul d'une fonction de croyance fusionnée.

On connaît aussi par le document Dubois, T. Denoeux, « Pertinence et sincérité en fusion d'informations » une méthode de fusion de fonctions de croyance issues de source pouvant mentir et dont les informations peuvent être non pertinentes.

Cependant, ces méthodes de fusion connues ne permettent pas de prendre en compte tous les types de connaissance sur la dépendance, la compétence et la sincérité des sources. Par exemple, si l'on note E1 l'état « les sources sont compétentes et non indépendantes » et E2 l'état « les sources sont indépendantes et au moins une est compétente», les méthodes connues ne permettent pas de traiter la connaissance : « avec une probabilité p, les sources sont dans l'état E1 et avec une probabilité 1-p, elles sont dans l'état E2 », bien que l'on connaisse déjà les opérateurs qui correspondent aux états E1 et E2 (respectivement, la règle prudente et la règle disjonctive). Plus généralement, on peut définir E={E1,...,EN} l'ensemble des états possibles de fonctionnement des capteurs et ⊕$^{Ei}$ l'opérateur correspondant à l'état Ei où les états Ei, i=1,...N, considérés n'ont pas nécessairement traits à la dépendance, la compétence et la sincérité des sources. Dans ce cas, il n'existe pas de méthode générale permettant de fusionner les informations imparfaites issues des capteurs lorsque que nous disposons d'une connaissance sur les états des capteurs du type « avec une probabilité pi, les capteurs sont dans l'état Ei, i=1,...N ».

L'invention vise à pallier les problèmes cités précédemment en proposant un procédé, un dispositif et un système pour la fusion d'informations provenant de plusieurs capteurs permettant de calculer une fonction de croyance fusionnée, en prenant en compte des connaissances sur les états de fonctionnement des capteurs.

A cet effet, l'invention a pour objet un procédé pour la fusion d'informations provenant de plusieurs capteurs produisant chacun une fonction de croyance représentant une connaissance sur un espace de raisonnement, et comportant plusieurs états de fonctionnement, ledit procédé comprenant une étape de calcul d'une fonction de croyance fusionnée et étant caractérisé en ce qu'il comporte, en outre, une étape de calcul de fonctions de croyance conditionnelles à partir des fonctions de croyance produites par les capteurs et d'une base d'opérateurs prédéfinie comportant des associations entre des états de capteurs et des opérateurs de fusion, une fonction de croyance conditionnelle représentant une connaissance sur l'espace de raisonnement lorsque l'ensemble des capteurs est dans un état de fonctionnement donné, et en ce que l'étape de calcul de la fonction de croyance fusionnée utilise les fonctions de croyance conditionnelles calculées et des connaissances issues d'une base de connaissances (104) sur l'état de fonctionnement des capteurs.

Selon une première variante de l'invention, les connaissances sur l'état de fonctionnement des capteurs sont représentées par une fonction de croyance indiquant la propension des capteurs à être dans un état de fonctionnement donné.

Selon la première variante de l'invention, la fonction de croyance fusionnée (m$_F$) suit la relation suivante :

$$m_F = \left( \left( \oplus_{i=1,...,N}^{D} m^{\Omega}[Ei]^{\Uparrow E \times \Omega} \right) \oplus^{D} m^{E \Uparrow E \times \Omega} \right)^{\downarrow \Omega}$$

où ⊕$^D$ est un opérateur appelé règle de Dempster non normalisée, m$^{\Omega}$[Ei], avec i=$_1$,...,N, sont des fonctions de croyance conditionnelles représentant une connaissance sur l'espace de raisonnement ($\Omega$) lorsque les capteurs sont dans différents états, N étant le nombre d'états de fonctionnement, et m$^E$ est une connaissance sur l'état de fonctionnement des capteurs, $\uparrow$,$\downarrow$ et $\Uparrow$ étant des opérations de manipulation de fonctions de croyance.

Selon une deuxième variante de l'invention, l'étape de calcul (106) de la fonction de croyance fusionnée utilise des informations contextuelles exprimées de la façon suivante : si un objet observé par les capteurs est de type A alors les capteurs ont une propension p à être dans un ensemble d'états E', où A est un sous-ensemble de l'espace des propositions ($\Omega$) et E' est un sous-ensemble d'un ensemble E des différents états des capteurs.

Selon la deuxième variante de l'invention, la fonction de croyance fusionnée suit la relation suivante :

$$m_F = \left( \left( \oplus_{i=1,...,N}^{D} m^{\Omega}[Ei]^{\Uparrow E \times \Omega} \right) \oplus^{D} \left( \oplus_{j=1,...,K}^{D} m^{E}\left[ Aj \right]^{\Uparrow E \times \Omega} \right) \right)^{\downarrow \Omega}$$

où ⊕$^D$ est un opérateur appelé règle de Dempster non normalisée, m$^{\Omega}$[Ei], avec i=1,...,N, sont des fonctions de croyance conditionnelles représentant une connaissance sur l'espace de raisonnement ($\Omega$) lorsque les capteurs sont dans différents états (E1, ..., EN), N étant le nombre d'états de fonctionnement, et m$^E$[Aj] est une connaissance contextuelle sur la propension des capteurs à être dans un état de fonctionnement donné lorsqu'un objet observé par le capteur est de type A$_j$, avec j=1,...,K, A$_j$ étant un sous-ensemble de $\Omega$ et tel que A$_1$,...,A$_K$ forme une partition de $\Omega$, $\uparrow$,$\downarrow$ et $\Uparrow$ étant des opérations de manipulation de fonctions de croyance.

L'invention concerne aussi un dispositif pour la fusion d'informations provenant de plusieurs capteurs produisant chacun une fonction de croyance représentant une connaissance sur un espace de raisonnement, et comportant plusieurs états de fonctionnement, le dispositif comprenant des moyens pour le calcul d'une fonction de croyance fusionnée et étant caractérisé en ce qu'il comprend, en outre des moyens pour le calcul de fonctions de croyance conditionnelles reliés aux capteurs et à une base d'opérateurs prédéfinie comportant des associations entre des états de capteurs et des opérateurs de fusion, une fonction de croyance conditionnelle représentant une connaissance sur l'espace de raisonnement lorsque l'ensemble des capteurs est dans un état de fonctionnement donné, et en ce que les moyens pour le calcul de la fonction de croyance fusionnée utilisent les fonctions de croyance conditionnelles calculées et des connaissances sur l'état de fonctionnement des capteurs provenant d'une base de connaissances sur l'état de fonctionnement des capteurs.

L'invention concerne aussi un système pour la fusion d'informations comprenant : au moins deux capteurs produisant chacun une fonction de croyance et des moyens de fusion des fonctions de croyance provenant desdits capteurs, lesdits moyens de fusion étant reliés aux capteurs, ledit système étant caractérisé en ce que les moyens de fusions d'informations comprennent le dispositif pour la fusion d'informations selon l'invention.

L'invention repose sur un mécanisme de fusion de fonctions de croyance. Pour appliquer ce mécanisme, diverses informations, connaissances et opérations doivent être modélisées dans le cadre de la théorie des fonctions de croyance : des informations fournies par les capteurs, des connaissances sur la propension des capteurs à être dans un état de fonctionnement donné et des opérateurs de fusion pour chaque état de fonctionnement considéré.

L'invention a pour avantage de prendre en compte des connaissances sur les états de fonctionnement des sources. Précisément, l'invention permet de prendre en compte des connaissances du type : « avec une probabilité pi, les sources sont dans l'état Ei », à la condition qu'il existe un opérateur $\oplus^{Ei}$ de fusion de fonction de croyance correspondant à l'état Ei.

Plus généralement, soit E={E1,...,EN} l'ensemble des états des sources, l'invention a pour avantage de prendre en compte des connaissances imparfaites, représentées par une fonction de croyance $m^E$ définie sur l'ensemble E, sur les états de fonctionnement des sources.

La solution apportée permet aussi la prise en compte de connaissances sur les comportements contextuels des sources. Par exemple, l'invention permet la prise en compte de la connaissance suivante : « sachant que la lettre observée est de type 'a', les capteurs sont indépendants et compétents, et sachant que la lettre est 'b', les capteurs sont compétents et ne sont pas indépendants ».

L'invention sera mieux comprise et d'autres avantages apparaîtront à la lecture de la description détaillée faite à titre d'exemple non limitatif et à l'aide des figures parmi lesquelles :

La figure 1 représente un diagramme du procédé selon l'invention.

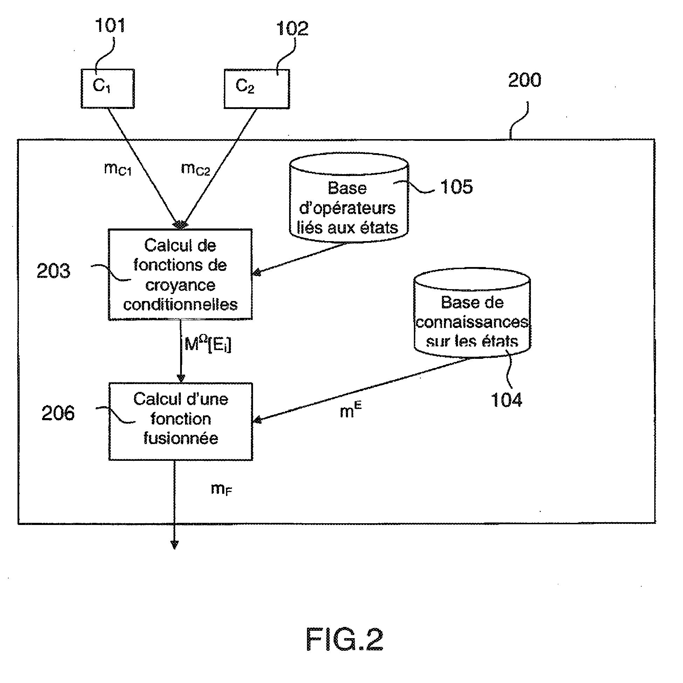

La figure 2 représente un exemple de mise en oeuvre du dispositif selon l'invention.

De façon générale, un système de fusion comporte au moins deux capteurs utilisés pour observer des objets. Ces observations sont utilisées pour classer l'objet parmi des catégories prédéterminées. L'ensemble de ces catégories est appelé espace de raisonnement et est noté $\Omega$. Lorsqu'un objet est observé par ces capteurs, chacun de ces capteurs fournis des informations sur cet objet sous la forme d'une fonction de croyance.

On se propose d'illustrer le procédé selon l'invention, à titre d'exemple non limitatif, avec le système multi-capteurs de type classifieur utilisé pour la reconnaissance optique de caractères manuscrits évoqué précédemment. On suppose que le système est destiné à déterminer si le caractère formé sur une image I (non représentée) est une des lettres 'a' ou 'b'.

Le terme capteur s'entend ici au sens large. Il inclut les dispositifs physiques pour l'acquisition des données (caméra, micro, ...) mais aussi des dispositifs pour le traitement de ces données, dans l'exemple : un classifieur.

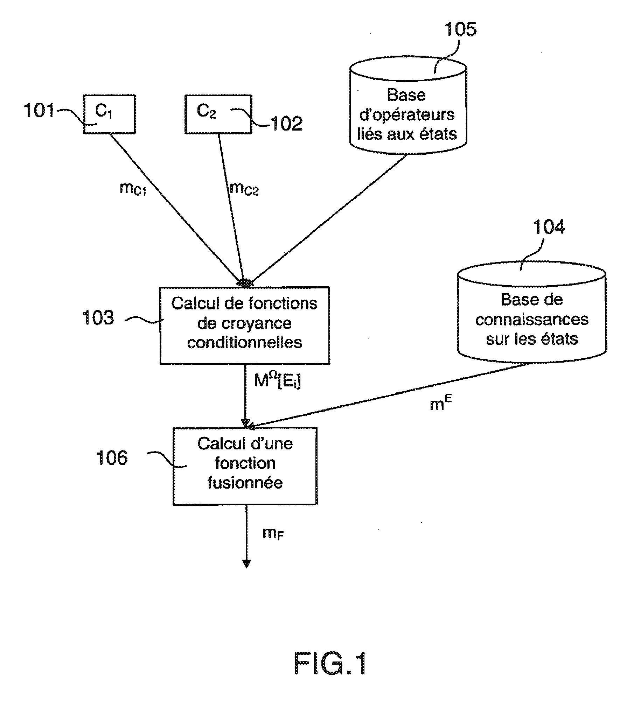

Un exemple de réalisation d'un système de fusion d'informations selon l'invention est illustré par la figure 1. Un tel système comprend un premier système de classification $C_1$ 101 et un second système de classification $C_2$ 102. On suppose que chacun des deux systèmes de classification comporte un dispositif permettant l'acquisition de l'image I tel qu'une caméra vidéo par exemple, et des moyens de traitement du signal comprenant la reconnaissance de caractère à partir de l'image I capturée et la création d'une fonction de croyance $m_{Ci}$ représentant la connaissance du capteur du capteur Ci sur $\Omega$ ={a, b}, avec i=1,2.

Dans l'exemple, le premier capteur $C_1$ fournit une fonction de croyance $m_{C1}$ définie comme suit :

$$m_{C1}(\{a\}) = 0.8$$

$$m_{C1}(\{a,b\}) = 0.2.$$

Le capteur $C_2$ fournit une fonction de croyance $m_{C2}$ définie comme suit :

$$m_{C2}(\{a\}) = 0.2$$

$$m_{C2}(\{a,b\}) = 0.8$$

Le procédé selon l'invention permet de prendre en compte des connaissances sur l'état de fonctionnement des capteurs. On note E l'espace des états des capteurs avec E = {E1, ...,En}. E1, ..., En représentent chacun un état de fonctionnement de l'ensemble des capteurs, par exemple : « les capteurs sont indépendants et compétents». Le procédé selon l'invention utilise une base de connaissances 104 sur les états des capteurs.

Dans cet exemple, on dispose d'une connaissance sur les états des deux systèmes de classification $C_1$ et $C_2$. Les méthodes de reconnaissance de formes selon l'art connu reposent sur des techniques d'apprentissage automatique utilisant des bases d'apprentissage prédéterminées. Dans l'exemple, on suppose que la base de connaissances 104 décrit deux états des capteurs. Un premier état E1, correspondant au cas où les classifieurs sont entrainés sur des bases d'apprentissage différentes, indique que les deux capteurs sont indépendants et compétents. Un second état E2 correspondant au cas où les classifieurs sont entrainés sur la même base d'apprentissage, indique que les deux capteurs sont non indépendants et compétents.

Selon une caractéristique de l'invention, les connaissances sur l'état de fonctionnement des capteurs sont représentées par une fonction de croyance $m^E$ indiquant la propension des capteurs à être dans un état donné.

Dans l'exemple, la fonction de croyance $m^E$ est définie comme suit :

$$m^E(\{E1\}) = 0.8$$

$$m^E(\{E2\}) = 0.2$$

La fonction de croyance indique que les capteurs ont une propension à être dans le premier état E1 (les deux capteurs sont indépendants et compétents) supérieure à la propension à être dans le second état E2 (les deux capteurs sont non indépendants et compétents).

Le procédé selon l'invention utilise une base d'opérateurs liés aux états 105 dans laquelle les états E1,...,EN sont associés à des opérateurs de fusion $\oplus^{E1}$,..., $\oplus^{EN}$. Dans l'exemple, la base d'opérateurs 105 est réalisée sous la forme d'une table associant à chacun des états E1 et E2 un opérateur de fusion :

| Etats | Opérateurs |
|-------|------------|
| E1 | $\oplus^D$ |
| E2 | $\oplus^P$ |

Comme on peut le voir dans cette table, l'état E1 (« les deux capteurs sont indépendants et compétents ») est associé à l'opérateur $\oplus^D$ (la règle de Dempster non normalisée), et l'état E2 (« les deux capteurs sont non indépendants et compétents ») est associé à l'opérateur $\oplus^P$ (la règle prudente).

Le procédé comporte une étape 103 de calcul de fonctions de croyance $m^\Omega[Ei]$, i=1,...,N, dites conditionnelles, à partir des fonctions de croyance $m_{C1}$ et $m_{C2}$ produites par les capteurs C1,C2 et de la base d'opérateurs 105 liant les états à des opérateurs. Les fonctions de croyance conditionnelles $m^\Omega[Ei]$, i=1,...,N, représentent la connaissance sur $\Omega$ lorsque les sources sont dans les états Ei, i=1,...,N. Sachant que les informations fournies par les capteurs doivent être fusionnées par l'opérateur $\oplus^{Ei}$ lorsque les sources sont dans l'état Ei, nous avons donc $m^\Omega[Ei](A) = m_{C1} \oplus^{Ei} m_{C2}(A)$, pour tout $A \subseteq \Omega$ et i=1,...,N. En pratique, on ne calcule des fonctions de croyance conditionnelles que pour certains états Ei $\in$ E : tous les états Ei $\in$ E' $\subseteq$ E avec E'={Ej :Ej$\in$E", m(E") $\neq$0, E"$\subseteq$E}.

Une étape 106 de calcul de la fonction de croyance fusionnée $m_F$ est réalisée en prenant en compte les connaissances sur les états des sources, représentées par la fonction de croyance $m^E$, et les fonctions de croyance conditionnelles calculées à l'étape 103 précédente. Selon une première variante de l'invention, la fonction de croyance fusionnée $m_F$ est calculée de la façon suivante :

$$m_F = \left( \left( \oplus_{i=1,...,N}^{D} m^\Omega[Ei]^{\Uparrow E \times \Omega} \right) \oplus^D m^{E \Uparrow E \times \Omega} \right)^{\downarrow \Omega}$$

avec $\uparrow$, $\downarrow$ et $\Uparrow$ des opérations de manipulation de fonctions de croyance sur les espaces produits connues dans la littérature, respectivement, sous les appellations extension vide, marginalisation et déconditionnement et définies par les formules suivantes.

-

Soit $m^E$ une fonction de croyance sur l'espace E. Son extension vide à l'espace produit E x $\Omega$ est une fonction de croyance notée $m^{E\uparrow E\times\Omega}$ et donnée par:

$$m^{E\uparrow E\times\Omega}(B) = \begin{cases} m^E(A) & \text{si } B = A\times\Omega, \ A\subseteq E, \\ 0 & \text{sinon.} \end{cases}$$

- Soit $m^\Omega[Ei]$ une fonction de croyance conditionnelle sur l'espace $\Omega$, avec $Ei\in E$. Son déconditionnement à l'espace produit E x $\Omega$ est une fonction de croyance notée $m\Omega[Ei]^{\uparrow E\times\Omega}$ et donnée par :

$$m^\Omega[Ei]^{\uparrow E\times\Omega}(C) = \begin{cases} m^\Omega[Ei](A) & \text{si } C = (A\times Ei)\cup(\Omega\times(E\setminus Ei)), \ A\subseteq\Omega \\ 0 & \text{sinon.} \end{cases}$$

- Soit $m^{E\times\Omega}$ une fonction de croyance sur l'espace produit E x $\Omega$. Sa marginalisation sur l'espace $\Omega$ est une fonction de croyance notée $m^{E\times\Omega\downarrow\Omega}$ et donnée par :

$$m^{E\times\Omega\downarrow\Omega}(A) = \sum_{\{B\subseteq E\times\Omega|\text{Projection}(B\downarrow\Omega)=A\}} m^{E\times\Omega}(B) \text{, pour tout } A\subseteq\Omega.$$

En appliquant à l'exemple la formule permettant de calculer la fonction de croyance fusionnée $m_F$, on obtient :

$$m_F = \left(m^\Omega[E1]^{\uparrow E\times\Omega} \oplus^D m^\Omega[E2]^{\uparrow E\times\Omega} \oplus^D m^{E\uparrow E\times\Omega}\right)^{\downarrow\Omega},$$

avec

$$m^\Omega[E1] = m_{C1} \oplus^D m_{C2},$$

$$m^\Omega[E2] = m_{C1} \oplus^P m_{C2},$$

ce qui signifie que lorsque les sources sont dans l'état E1, la connaissance sur $\Omega$ est obtenue en fusionnant $m_{C1}$ et $m_{C2}$ par la règle de Dempster non normalisée, et lorsque les sources sont dans l'état E2, la connaissance sur $\Omega$ est obtenue en fusionnant $m_{C1}$ et $m_{C2}$ par la règle prudente.
Puis, en appliquant les formules de l'extension vide, de la marginalisation, du déconditionnement et de la règle de Dempster on obtient le résultat suivant connu dans la littérature :

$$m_F = m^E(\{E1\}) * m_{C1} \oplus^D m_{C2} + m^E(\{E2\}) * m_{C1} \oplus^P m_{C2,}$$

et en particulier

$$m_F(\{a\}) = m^E(\{E1\}) * m_{C1} \oplus^D m_{C2}(\{a\}) + m^E(\{E2\}) * m_{C1} \oplus^P m_{C2}(\{a\}),$$

$$m_F(\{a,b\}) = m^E(\{E1\}) * m_{C1}\oplus^D m_{C2}(\{a,b\}) + m^E(\{E2\}) * m_{C1}\oplus^P m_{C2}(\{a,b\}).$$

En appliquant les formules de la règle de Dempster $\oplus^D$ et de la règle prudente $\oplus^P$, on obtient alors

$$m_F(\{a\}) = m^E(\{E1\}) * (m_{C1}(\{a\}) * m_{C2}(\{a\}) + m_{C1}(\{a\}) * m_{C2}(\{a,b\}) + m_{C1}(\{a,b\}) * m_{C2}(\{a\})) + m^E(\{E2\}) * (1-minimum(m_{C1}(\{a,b\}), m_{C2}(\{a,b\})))$$

$$= 0.8 * (0.8*0.2+0.8*0.8+0.2*0.2)+0.2(1-minimum(0.2,0.8))$$

$$= 0.8 * 0.84 + 0.2 * 0.8 = 0.832$$

$$m_F(\{a,b\})=m^E(\{E1\}) * (m_{C1}(\{a,b\}) * m_{C2}(\{a,b\})) + m^E(\{E2\}) * (minimum(m_{C1}(\{a,b\}), m_{C2}(\{a,b\}))$$

$$= 0.8 * (0.2*0.8) + 0.2 * minimum(0.2,0.8)$$

$$= 0.8 * 0.16 + 0.2 * 0.2$$

$$= 0.168$$

Le résultat de la fusion indique qu'il est fortement probable que le caractère observé soit un {a}, bien qu'une légère part d'ignorance subsiste.

Selon une seconde variante de l'invention, l'étape de calcul de la fonction de croyance fusionnée utilise une information contextuelle. Une information contextuelle précise un état de fonctionnement du capteur dans un contexte particulier. Cette information est exprimée sous la forme suivante : « sachant que l'objet observé est de type A, les capteurs ont une propension p à être dans l'ensemble d'états E' » où A est un sous-ensemble de $\Omega$ et E' est un sous-ensemble d'un ensemble E des différents états (E1,...,EN) des capteurs.

Dans l'exemple, les classifieurs $C_1$ et $C_2$ sont indépendants pour reconnaître la lettre 'a' car ils ont été entrainés sur des bases d'apprentissage différentes pour la reconnaissance de cette lettre. Les mêmes classifieurs $C_1$ et $C_2$ sont non indépendants pour reconnaître la lettre 'b' car ils ont été entrainés sur la même base d'apprentissage pour la reconnaissance de cette lettre.

Dans ce cas, la connaissance sur les états de fonctionnement des capteurs n'est plus représentée par une fonction de croyance $m^E$, mais par une pluralité de fonctions de croyance conditionnelles, notées $m^E[A_1]$,..., $m^E[A_K]$, représentant la connaissance sur les états des sources lorsque la valeur prise par la variable $X$ est dans la partie $A_j$ de $\Omega$, j=1,...,K. Notons que $A_1$,...,$A_K$ forme une partition de $\Omega$. Il y a alors potentiellement $|\Omega|$ fonctions de croyance conditionnelles si l'on connaît les comportements des sources pour tout élément de $\Omega$.

Dans l'exemple, on dispose de connaissances contextuelles exprimées par les fonctions de croyance conditionnelles suivantes :

$m^E[\{a\}](E_1) = 1$ indiquant que sachant que l'objet observé est la lettre {a} les capteurs sont compétents et indépendants,

$m^E[\{b\}](E_2) = 1$ indiquant que sachant que l'objet observé est la lettre b les capteurs sont compétents et non indépendants.

Selon une seconde variante de réalisation de l'invention, la fonction de croyance fusionnée se calcule alors comme suit : $m_F =$

$$\left(\left(\oplus^D_{i=1,...,N} m^\Omega[Ei]^{\uparrow E\times\Omega}\right) \oplus^D \left(\oplus^D_{j=1,...,K} m^E[Aj]^{\uparrow E\times\Omega}\right)\right)^{\downarrow\Omega}$$

avec

$$m^E[Aj]^{\uparrow E\times\Omega}(A) = \begin{cases} m^E[Aj](C) & \text{si } A = (C\times Aj)\cup(E\times(\Omega\setminus Aj)),\ C\subseteq E \\ 0 & \text{sinon.} \end{cases}$$

$m^E[Aj]$ est une connaissance contextuelle sur la propension des capteurs à être dans un état de fonctionnement donné, $m^E[Aj](E')$ indiquant la propension du capteur à être dans l'ensemble d'états E'$\subseteq$E={E1,...,EN} sachant que l'objet observé est dans Aj.

En appliquant à l'exemple la formule permettant de calculer la fonction de croyance fusionnée $m_F$, on obtient :

$$m_F = \left( m^\Omega[E1]^{\Uparrow E \times \Omega} \oplus^D m^\Omega[E2]^{\Uparrow E \times \Omega} \oplus^D m^E[\{a\}]^{\Uparrow E \times \Omega} \oplus^D m^E[\{b\}]^{\Uparrow E \times \Omega} \right)^{\downarrow \Omega}$$

Afin de calculer $m_F$ à partir de cette formule, il faut donc

1. Calculer les déconditionnements sur E x $\Omega$ de m$\Omega$[E1], $m^\Omega$[E2], M$^E$[{a}] et m$^E$[{b}], c'est-à-dire calculer $m^\Omega[E1]^{\Uparrow E \times \Omega}$, $m^\Omega[E2]^{\Uparrow E \times \Omega}$, $m^E[\{a\}]^{\Uparrow E \times \Omega}$ et $m^E[\{b\}]^{\Uparrow E \times \Omega}$.

2. Puis combiner ces déconditionnements par la règle de Dempster, c'est-à-dire calculer

$$m^\Omega[E1]^{\Uparrow E \times \Omega} \oplus^D m^\Omega[E2]^{\Uparrow E \times \Omega} \oplus^D m^E[\{a\}]^{\Uparrow E \times \Omega} \oplus^D m^E[\{b\}]^{\Uparrow E \times \Omega}$$

3. Puis marginaliser sur $\Omega$ le résultat de cette combinaison, c'est-à-dire calculer $(m^\Omega[E1]^{\Uparrow E \times \Omega} \oplus^D m^\Omega[E2]^{\Uparrow E \times \Omega} \oplus^D m^E[\{a\}]^{\Uparrow E \times \Omega} \oplus^D m^E[\{b\}]^{\Uparrow E \times \Omega})^{\downarrow \Omega}$

En appliquant la formule du déconditionnement, on obtient :

- $m^E[\{a\}]^{\Uparrow E \times \Omega}((\{a\} \times \{E1\}) \cup (\{b\} \times \{E\})) = 1$,
- $m^E[\{b\}]^{\Uparrow E \times \Omega}((\{b\} \times \{E2\}) \cup (\{a\} \times \{E\})) = 1$,
- $m^\Omega[E1]^{\Uparrow E \times \Omega}((\{a\} \times \{E1\}) \cup (\Omega \times \{E2\})) = m_{C1} \oplus^D m_{C2}(\{a\})$
  $m^\Omega[E1]^{\Uparrow E \times \Omega}(\Omega \times E) = m_{C1} \oplus^D m_{C2}(\{a,b\})$
- $m^\Omega[E2]^{\Uparrow E \times \Omega}((\{a\} \times \{E2\}) \cup (\Omega \times \{E1\})) = m_{C1} \oplus^P m_{C2}(\{a\})$
  $m^\Omega[E2]^{\Uparrow E \times \Omega}(\Omega \times E) = m_{C1} \oplus^P m_{C2}(\{m_{C2}(\{a,b\})$

En combinant ces déconditionnements par la règle de Dempster, on obtient une fonction de croyance, notée $m_F^{E \times \Omega}$, sur E x $\Omega$ telle que

$m_F^{E \times \Omega}(\{a\} \times \{E1\}) = m_{C1} \oplus^D m_{C2}(\{a\}) * m_{C1} \oplus^P m_{C2}(\{a\}) + m_{C1} \oplus^D m_{C2}(\{a,b\}) * m_{C1} \oplus^P m_{C2}(\{a\})$

$m_F^{E \times \Omega}((\{a\} \times \{E1\}) \cup (\{b\} \times \{E2\})) = m_{C1} \oplus^D m_{C2}(\{a\}) * m_{C1} \oplus^P m_{C2}(\{a,b\}) + m_{C1} \oplus^D m_{C2}(\{a,b\}) * m_{C1} \oplus^P m_{C2}(a,b)$ En marginalisant cette fonction de croyance sur $\Omega$, on obtient :

$m_F(\{a\}) = m_{C1} \oplus^D m_{C2}(\{a\}) * m_{C1} \oplus^P m_{C2}(\{a\}) + m_{C1} \oplus^D m_{C2}(\{a,b\}) * m_{C1} \oplus^P m_{C2}(\{a\}) = 0.84*0.8 + 0.16*0.8 = 0.8$

$m_F(\{a,b\}) = m_{C1} \oplus^D m_{C2}(\{a\}) * m_{C1} \oplus^P m_{C2}(\{a,b\}) + m_{C1} \oplus^D m_{C2}(\{a,b\}) * m_{C1} \oplus^P m_{C2}(\{a,b\}) = 0.84*0.2 + 0.16*0.2 = 0.2$

Le résultat de la fusion indique qu'il est fortement probable que le caractère observé soit un {a}, bien qu'une légère part d'ignorance subsiste.

L'invention peut aussi s'appliquer à d'autres domaines, comme par exemple la reconnaissance de cible aérienne. Les capteurs sont alors des radars. Le système de fusion permet de classifier des cibles dans des catégories prédéfinies par exemple avion, hélicoptère et missile. Le cadre de raisonnement est alors $\Omega$ = {avion, hélicoptère, missile}.

L'invention concerne aussi un dispositif pour la fusion d'informations 200 provenant de plusieurs capteurs $C_1$, $C_2$ produisant chacun une fonction de croyance $m_{C1}$, $m_{C2}$ et comportant plusieurs états de fonctionnement E1,..., EN. Le dispositif 200 comprend des moyens 206 pour le calcul d'une fonction de croyance fusionnée $m_F$ à partir des fonctions de croyance $m_{C1}$. $m_{C2}$ issues des capteurs $C_1$, $C_2$, Le dispositif comprend, en outre, des moyens pour le calcul 203 de fonctions de croyance conditionnelles reliés à une base d'opérateurs prédéfinie 105 comportant des associations entre des états de capteurs et des opérateurs de fusion, et en ce que les moyens pour le calcul 206 de la fonction de croyance fusionnée $m_F$ utilisent les fonctions de croyance conditionnelles calculées et des

Selon une première variante de réalisation du dispositif selon l'invention, la base de connaissances 104 sur l'état de fonctionnement des capteurs comprend une fonction de croyance $m^E$ indiquant la propension des capteurs $C_1$, $C_2$ à être dans un état de fonctionnement donné.

Selon une seconde variante de réalisation du dispositif selon l'invention, les fonctions de croyances issues des capteurs étant définies sur un espace de propositions $\Omega$, la base de connaissances 104 sur l'état de fonctionnement des capteurs comprend des informations contextuelles exprimées de la façon suivante : si l'objet observé est de type A alors les capteurs ont une propension p à être dans un ensemble d'états E', où A est un sous-ensemble de l'espace des propositions $\Omega$ et E' est un sous-ensemble d'un ensemble E des différents états E1,...,EN des capteurs.

L'invention concerne aussi un système pour la fusion d'informations comprenant : au moins deux capteurs $C_1$,

$C_2$ produisant chacun une fonction de croyance $m_{C1}$, $m_{C2}$ et des moyens de fusion des fonctions de croyance $m_{C1}$, $m_{C2}$ provenant desdits capteurs $C_1$, $C_2$. Les moyens de fusion sont reliés aux capteurs, Les moyens de fusions d'informations comprennent le dispositif pour la fusion informations 200 selon l'invention.

L'invention peut aussi s'appliquer par exemple dans le cadre d'un système de surveillance aérienne chargé de reconnaître des aéronefs en fonctions de leur modèle (avions de lignes, avions de chasse, hélicoptère) à l'aide d'un ensemble de radars.

**Revendications**

1. Procédé pour la fusion d'informations provenant de plusieurs capteurs ($C_1$, $C_2$) produisant chacun une fonction de croyance ($m_{C1}$, $m_{C2}$) représentant une connaissance sur un espace de raisonnement ($\Omega$), et comportant plusieurs états (E1,..., EN) représentant chacun un état de fonctionnement de l'ensemble des capteurs, ledit procédé comprenant une étape de calcul (106) d'une fonction de croyance fusionnée ($m_F$) et étant **caractérisé en ce qu'**il comporte, en outre, une étape de calcul (103) de fonctions de croyance conditionnelles à partir des fonctions de croyance ($m_{C1}$, $m_{C2}$) produites par les capteurs ($C_1$, $C_2$) et d'une base d'opérateurs prédéfinie (105) comportant des associations entre des états de capteurs et des opérateurs de fusion, une fonction de croyance conditionnelle représentant une connaissance sur l'espace de raisonnement ($\Omega$) lorsque l'ensemble des capteurs est dans un état de fonctionnement (E1,..., EN) donné, et **en ce que** l'étape de calcul (106) de la fonction de croyance fusionnée ($m_F$) utilise les fonctions de croyance conditionnelles calculées et des connaissances ($m^E$) issues d'une base de connaissances (104) sur l'état de fonctionnement des capteurs et des informations contextuelles indiquant que : si un objet observé par les capteurs ($C_1$, $C_2$) est de type A alors les capteurs ont une propension p à être dans un ensemble d'états E', où A est un sous-ensemble de l'espace des propositions ($\Omega$) et E' est un sous-ensemble d'un ensemble E des différents états (E1,...,EN) des capteurs.

2. Procédé pour la fusion d'informations selon la revendication 1, **caractérisé en ce que** les connaissances sur l'état de fonctionnement des capteurs sont représentées par une fonction de croyance ($m^E$) indiquant la propension des capteurs ($C_1$, $C_2$) à être dans un état de fonctionnement donné.

3. Procédé pour la fusion d'informations selon la revendication 2, **caractérisé en ce que** la fonction de croyance fusionnée ($m_F$) suit la relation suivante :

$$m_F = \left( \left( \oplus^D_{i=1,...,N} m^{\Omega}[Ei]^{\Uparrow E \times \Omega} \right) \oplus^D m^{E \uparrow E \times \Omega} \right)^{\downarrow \Omega}$$

où $\oplus^D$ est un opérateur appelé règle de Dempster non normalisée, $m^{\Omega}[Ei]$, avec i=1,...,N, sont des fonctions de croyance conditionnelles représentant une connaissance sur l'espace de raisonnement ($\Omega$) lorsque les capteurs sont dans différents états (E1, ..., EN), N étant le nombre d'états de fonctionnement, et $m^E$ est une connaissance sur l'état de fonctionnement des capteurs, $\uparrow, \downarrow$ et $\Uparrow$ étant des opérations de manipulation de fonctions de croyance appelées respectivement extension vide, marginalisation et déconditionnement.

4. Procédé pour la fusion d'informations selon la revendication 1, **caractérisé en ce que** la fonction de croyance fusionnée ($m_F$) suit la relation suivante : $m_F = \left( \left( \oplus^D_{i=1,...,N} m^{\Omega}[Ei]^{\Uparrow E \times \Omega} \right) \oplus^D \left( \oplus^D_{j=1,...,K} m^E[Aj]^{\Uparrow E \times \Omega} \right) \right)^{\downarrow \Omega}$

où $\oplus^D$ est un opérateur appelé règle de Dempster non normalisée, $m\Omega[Ei]$, avec i=1,...,N, sont des fonctions de croyance conditionnelles représentant une connaissance sur l'espace de raisonnement ($\Omega$) lorsque les capteurs sont dans différents états (E1, ..., EN), N étant le nombre d'états de fonctionnement, et $m^E[Aj]$ est une connaissance contextuelle sur la propension des capteurs à être dans un état de fonctionnement donné lorsqu'un objet observé par les capteurs est de type $A_j$, avec j=1,...,K, $A_j$ étant un sous-ensemble de $\Omega$ et tel que $A_1,...,A_K$ forme une partition de $\Omega$, $\uparrow, \downarrow$ et $\Uparrow$ étant des opérations de manipulation de fonctions de croyance appelées respectivement extension vide, marginalisation et déconditionnement.

5. Dispositif pour la fusion d'informations (200) provenant de plusieurs capteurs ($C_1$, $C_2$) produisant chacun une fonction de croyance ($m_{C1}$, $m_{C2}$) représentant une connaissance sur un espace de raisonnement ($\Omega$), et comportant plusieurs états de fonctionnement (E1,..., EN), le dispositif (200) comprenant des moyens (206) pour le calcul d'une fonction de croyance fusionnée ($m_F$) et étant **caractérisé en ce qu'**il comprend, en outre des moyens pour le calcul (203) de fonctions de croyance conditionnelles reliés aux capteurs ($C_1$, $C_2$) et à une base d'opérateurs prédéfinie (105) comportant des associations entre des états de capteurs et des opérateurs de fusion, une fonction de croyance conditionnelle représentant une connaissance sur l'espace de raisonnement ($\Omega$) lorsque l'ensemble des capteurs est dans un état de fonctionnement (E1,..., EN) donné, et **en ce que** les moyens pour le calcul (206) de la fonction de croyance fusionnée ($m_F$) utilisent les fonctions de croyance conditionnelles calculées et des connaissances sur l'état de fonctionnement des capteurs provenant d'une base de connaissances (104) sur l'état de fonctionnement des capteurs, ladite base de connaissances (104) comprenant des informations contextuelles indiquant que : si un objet observé par les capteurs est de type A alors les capteurs ont une propension p à être dans un ensemble d'états E', où A est un sous-ensemble de l'espace des propositions ($\Omega$) et E' est un sous-ensemble d'un ensemble E des différents états (E1,...,EN) des capteurs.

6. Dispositif pour la fusion d'informations (200) d'informations selon la revendication 5, **caractérisé en ce que** la base de connaissances (104) sur l'état de fonctionnement des capteurs comprend des fonctions de croyance ($m^E$) indiquant la propension des capteurs ($C_1$, $C_2$) à être dans un état de fonctionnement donné.

7. Système pour la fusion d'informations comprenant : au moins deux capteurs ($C_1$, $C_2$) produisant chacun une fonction de croyance ($m_{C1}$, $m_{C2}$) et des moyens de fusion des fonctions de croyance ($m_{C1}$, $m_{C2}$) provenant desdits capteurs ($C_1$, $C_2$), lesdits moyens de fusion étant reliés aux capteurs, ledit système étant **caractérisé en ce que** les moyens de fusions d'informations comprennent le dispositif pour la fusion d'informations (200) selon l'une des revendications 5 ou 6.

**Patentansprüche**

1. Verfahren zum Kombinieren von Informationen, die von mehreren Sensoren ($C_1$, $C_2$) abgeleitet sind, die jeweils eine Glaubwürdigkeitsfunktion ($m_{C1}$, $m_{C2}$) produzieren, die ein Wissen über einen Wahrnehmungsraum ($\Omega$) darstellt, und mehrere Zustände (E1 ,... ,EN) aufweisen, die jeweils einen Betriebszustand aller Sensoren darstellen, wobei das Verfahren einen Berechnungsschritt (106) einer kombinierten Glaubwürdigkeitsfunktion ($m_F$) umfasst und **dadurch gekennzeichnet ist, dass** es ferner einen Berechnungsschritt (103) bedingter Glaubwürdigkeitsfunktionen ausgehend von Glaubwürdigkeitsfunktionen ($m_{C1}$, $m_{C2}$) aufweist, die von den Sensoren ($C_1$, $C_2$) produziert werden und einer vorbestimmten Operatorenbank (105), die Assoziationen zwischen Sensorzuständen und Kombinationsoperatoren aufweisen, wobei eine bedingte Glaubwürdigkeitsfunktion ein Wissen über den Wahrnehmungsraum ($\Omega$) darstellt, wenn sich alle Sensoren in einem bestimmten Betriebszustand (E1, ..., EN) befinden und dass der Berechnungsschritt (106) der kombinierten Glaubwürdigkeitsfunktion ($m_F$) die berechneten bedingten Glaubwürdigkeitsfunktionen und Wissen ($m^E$) aus einer Wissensbank (104) über den Betriebszustand der Sensoren und Kontextinformationen verwendet, die angeben, ob ein von den Sensoren ($C_1$, $C_2$) beobachtetes Objekt vom Typ A ist, da die Sensoren eine Neigung p haben, sich in einer Zustandsgruppe E' zu befinden, wobei A eine Untergruppe des Theoremraums ($\Omega$) ist und E' eine Untergruppe einer Gruppe E der verschiedenen Zustände (E1, ..., EN) der Sensoren ist.

2. Verfahren zum Kombinieren von Informationen nach Anspruch 1, **dadurch gekennzeichnet, dass** das Wissen über den Betriebszustand der Sensoren von einer Glaubwürdigkeitsfunktion ($m^E$) dargestellt werden, die die Neigung der Sensoren (C1, $C_2$) angibt, in einem bestimmten Betriebszustand zu sein.

3. Verfahren zum Kombinieren von Informationen nach Anspruch 2, **dadurch gekennzeichnet, dass** die kombinierte Glaubwürdigkeitsfunktion ($m_F$) der folgenden Relation folgt:

$$m_F = \left( \left( \oplus_{i=1,...,N}^{D} m^{\Omega}[Ei]^{\Uparrow E \times \Omega} \right) \oplus^{D} m^{E \uparrow E \times \Omega} \right)^{\downarrow \Omega}$$

wobei $\oplus^D$ ein Operator ist, der als nicht genormte Dempster-Regel bezeichnet wird, $m^{\Omega}[Ei]$ mit i=1, ..., N bedingte Glaubwürdigkeitsfunktionen sind, die ein Wissen über den Wahrnehmungsraum ($\Omega$) darstellen, wenn die Sensoren in verschiedenen Zuständen (E1, ..., EN) sind, wobei N die Anzahl der Betriebszustände ist und $m^E$ ein Wissen über den Betriebszustand der Sensoren ist, wobei $\uparrow$, $\downarrow$ und $\Uparrow$ Manipulationsoperationen von Glaubwürdigkeitsfunktionen sind, die jeweils als leere Extension, Marginalisierung oder Dekonditionierung bezeichnet werden.

4. Verfahren zum Kombinieren von Informationen nach Anspruch 1, **dadurch gekennzeichnet, dass** die kombinierte Glaubwürdigkeitsfunktion ($m_F$) der folgenden Relation folgt:

$$m_F = \left( \left( \oplus_{i=1,\dots,N}^{D} m^{\Omega}[Ei]^{\cap E \times \Omega} \right) \oplus^{D} \left( \oplus_{j=1,\dots,K}^{D} m^{E}[Aj]^{\cap E \times \Omega} \right) \right)^{\downarrow \Omega}$$

wobei $\oplus^{D}$ ein Operator ist, der als nicht genormte Dempster-Regel bezeichnet wird, $m\Omega$ [Ei] mit i=1, ..., N bedingte Glaubwürdigkeitsfunktionen sind, die ein Wissen über den Wahrnehmungsraum ($\Omega$) darstellen, wenn die Sensoren in verschiedenen Zuständen (E1, ..., EN) sind, wobei N die Anzahl der Betriebszustände ist und $m^{E}[A_j]$ ein kontextuelles Wissen über die Neigung der Sensoren ist, in einem bestimmten Betriebszustand zu sein, wenn ein von den Sensoren beobachtetes Objekt vom Typ $A_j$ ist, mit j=1, ..., K, wobei $A_j$ eine Untergruppe von $\Omega$ ist und derart, dass $A_1$, ..., $A_K$ eine Partition von $\Omega$ bildet, wobei $\uparrow$, $\downarrow$ und $\uparrow$ Manipulationsoperationen von Glaubwürdigkeitsfunktionen sind, die jeweils als leere Extension, Marginalisierung oder Dekonditionierung bezeichnet werden.

5. Vorrichtung zum Kombinieren von Informationen (200), die von mehreren Sensoren ($C_1$, $C_2$) abgeleitet sind, die jeweils eine Glaubwürdigkeitsfunktion ($m_{C1}$, $m_{C2}$) produzieren, die ein Wissen über einen Wahrnehmungsraum ($\Omega$) darstellt, und mehrere Betriebszustände (E1 ,..., EN) aufweisen, wobei die Vorrichtung (200) Berechnungsmittel (206) einer kombinierten Glaubwürdigkeitsfunktion ($m_F$) umfasst und **dadurch gekennzeichnet ist, dass** sie neben Berechnungsmitteln (203) bedingter Glaubwürdigkeitsfunktionen, die mit den Sensoren ($C_1$, $C_2$) und einer vorbestimmten Operatorenbank (105) verbunden sind, die Assoziationen zwischen den Sensorzuständen und Kombinationsoperatoren aufweist, eine bedingte Glaubwürdigkeitsfunktion umfasst, die ein Wissen über den Wahrnehmungsraum ($\Omega$) darstellt, wenn sich alle Sensoren in einem bestimmten Betriebszustand (E1, ..., EN) befinden, und dass die Berechnungsmittel (206) der kombinierten Glaubwürdigkeitsfunktion ($m_F$) die berechneten bedingten Glaubwürdigkeitsfunktionen und Wissen über den Betriebszustand der Sensoren aus einer Wissensbank (104) über den Betriebszustand der Sensoren verwenden, wobei die Wissensbank (104) Kontextinformationen umfasst, die angeben, ob ein von den Sensoren beobachtetes Objekt vom Typ A ist, da die Sensoren eine Neigung p haben, sich in einer Zustandsgruppe E' zu befinden, wobei A eine Untergruppe des Theoremraums ($\Omega$) ist und E' eine Untergruppe einer Gruppe E der verschiedenen Zustände (E1, ..., EN) der Sensoren ist.

6. Vorrichtung zum Kombinieren von Informationen (200) nach Anspruch 5, **dadurch gekennzeichnet, dass** die Wissensbank (104) über den Betriebszustand der Sensoren Glaubwürdigkeitsfunktionen ($m^{E}$) umfasst, die die Neigung der Sensoren ($C_1$, $C_2$) angeben, in einem bestimmten Betriebszustand zu sein.

7. System zum Kombinieren von Informationen, das umfasst: mindestens zwei Sensoren ($C_1$, $C_2$), die jeweils eine Glaubwürdigkeitsfunktion ($m_{C1}$, $m_{c2}$) produzieren und Kombinationsmittel der Glaubwürdigkeitsfunktionen ($m_{C1}$, $m_{C2}$) aus den Sensoren ($C_1$, $C_2$), wobei die Kombinationsmittel mit den Sensoren verbunden sind, wobei das System **dadurch gekennzeichnet ist, dass** die Informationskombinationsmittel die Vorrichtung für die Kombination von Informationen (200) nach einem der Ansprüche 5 oder 6 umfassen.

**Claims**

1. A method for merging information originating from a plurality of sensors ($C_1$, $C_2$) each producing a belief function ($m_{c1}$, $m_{c2}$) representing knowledge relating to a reasoning space ($\Omega$), and comprising a plurality of states (E1, ..., EN) each representing an operating state of the set of sensors, said method comprising a step (106) of calculating a merged belief function ($m_F$), and being **characterised in that** it further comprises a step (103) of calculating conditional belief functions on the basis of belief functions ($m_{ci}$, $m_{c2}$) produced by said sensors ($C_1$, $C_2$) and a predefined base of operators (105) comprising associations between states of sensors and merging operators, a conditional belief function representing knowledge relating to the reasoning space ($\Omega$) when the set of sensors is in a given operating state (E1, ..., EN), and **in that** said step (106) of calculating said merged belief function ($m_F$) uses the calculated conditional belief functions and the knowledge ($m^{E}$) coming from a knowledge database (104) relating to the operating state of the sensors and contextual information indicating that: if an object observed by said sensors ($C_1$, $C_2$) is of type A then the sensors have a propensity p to be in a set of states E', where A is a sub-set of the space of the propositions ($\Omega$) and E' is a sub-set of a set E of different states (E1, ..., EN) of the sensors.

2. The method for merging information according to claim 1, **characterised in that** the knowledge relating to the operating state of the sensors is shown by a belief function ($m^E$) indicating the propensity of said sensors ($C_1$, $C_2$) to be in a given operating state.

3. The method for merging information according to claim 2, **characterised in that** said merged belief function (mF) follows the following relation:

$$m_F = \left(\left(\oplus_{i=1,...,N}^{D} m^{\Omega}[Ei]^{\Uparrow E \times \Omega}\right) \oplus^{D} m^{E \uparrow E \times \Omega}\right)^{\downarrow \Omega}$$

where $\oplus^D$ is an operator, designated the non-normalised Dempster rule, $m^{\Omega}[Ei]$, with i=1,...,N, are conditional belief functions representing knowledge relating to the reasoning space ($\Omega$) when the sensors are in different states (E1, ..., EN), N being the number of operating states, and $m^E$ is knowledge of the operating state of the sensors, $\uparrow$, $\downarrow$ and $\Uparrow$ being operations for handling belief functions respectively designated empty extension, marginalisation and deconditioning.

4. The method for merging information according to claim 1, **characterised in that** said merged belief function ($m_F$) follows the following relation: $m_F = \left(\left(\oplus_{i=1,...,N}^{D} m^{\Omega}[Ei]^{\Uparrow E \times \Omega}\right) \oplus^{D} \left(\oplus_{j=1,...,K}^{D} m^{E}[Aj]^{\Uparrow E \times \Omega}\right)\right)^{\downarrow \Omega}$ where $\oplus^D$ is an operator, designated the non-normalised Dempster rule, $m^{\Omega}[Ei]$, with i=1,...,N, are conditional belief functions representing knowledge relating to the reasoning space ($\Omega$) when the sensors are in different states (E1, ..., EN), N being the number of operating states, and $m_E[Aj]$ is contextual knowledge of the propensity of the sensors to be in a given operating state when an object observed by the sensors is of the $A_j$ type, with j=1,...,K, $A_j$ being a sub-set of $\Omega$ and such that $A_1$,...,$A_K$ forms a partition of $\Omega$, $\uparrow$, $\uparrow$ and $\Uparrow$ being operations for handling belief functions respectively designated empty extension, marginalisation and deconditioning.

5. A device (200) for merging information originating from a plurality of sensors ($C_1$, $C_2$) each producing a belief function ($m_{C1}$, $m_{C2}$) representing knowledge relating to a reasoning space ($\Omega$), and comprising a plurality of states (E1, ..., EN), said device (200) comprising means (206) for calculating a merged belief function ($m_F$), and being **characterised in that** it further comprises means (203) for calculating conditional belief functions associated with said sensors ($C_1$, $C_2$) and a predefined operators base (105) comprising associations between states of sensors and merging operators, a conditional belief function representing knowledge relating to the reasoning space ($\Omega$) when the set of sensors is in a given operating state (E1, ..., EN), and **in that** said means (206) for calculating the merged belief function ($m_F$) uses the calculated conditional belief functions and knowledge relating to the operating state of the sensors originating from a knowledge base (104) relating to the operating state of the sensors, said knowledge base (104) comprising contextual information indicating that: if an object observed by the sensors is of type A then the sensors have a propensity p to be in a set of states E', where A is a sub-set of the space of the propositions ($\Omega$) and E' is a sub-set of a set E of different states (E1, ..., EN) of the sensors.

6. The device (200) for merging information according to claim 5, **characterised in that** the knowledge base (104) relating to the operating state of the sensors comprises belief functions ($m^E$) indicating the propensity of the sensors ($C_1$, $C_2$) to be in a given operating state.

7. A system for merging information comprising: at least two sensors ($C_1$, $C_2$) each producing a belief function ($m_{C1}$, $m_{C2}$) and means for merging belief functions ($m_{C1}$, $m_{C2}$) originating from said sensors ($C_1$, $C_2$), said merging means being associated with the sensors, said system being **characterised in that** said means for merging information comprise said device (200) for merging information according to claim 5 or 6.

FIG.1

101

102

200

$C_1$

$C_2$

$m_{C1}$    $m_{C2}$

Base
d'opérateurs
liés aux états

105

203

Calcul de
fonctions de
croyance
conditionnelles

Base de
connaissances
sur les états

$M^{\Omega}[E_i]$

104

206

Calcul d'une
fonction
fusionnée

$m^E$

$m_F$

FIG.2